# EUROPEAN PATENT APPLICATION

(11) **EP 4 600 851 A1**
(43) Date of publication of application: **13.08.2025**
(21) Application number: 22961466.4
(22) Date of filing: 07.10.2022
(51) Int. Cl.: G06F 21/32

(54) **INFORMATION PROCESSING DEVICE AND CONTROL METHOD**

(71) Applicant: Lenovo (Singapore) Pte. Ltd., Singapore 556741 (SG)
(72) Inventor: NISHIO Masashi, Yokohama-shi, Kanagawa 220-0012 (JP)
(74) Representative: Openshaw & Co.
(86) International application number: PCT/JP2022/037624
(87) International publication number: WO 2024/075280

(57) **Abstract**

An information processing device detects an area of a face image with a face captured therein from a captured image captured by an imaging unit, gives an instruction for bootup from a standby state based on the fact that the area of the face image is detected from a first captured image captured by the imaging unit in the standby state, boots a system based on the instruction, and after bootup of the system, executes authentication processing to authenticate whether or not it is an authorized user. Further, based on the face image detected from the first captured image in the standby state, and the authentication result of the authentication processing, the information processing device decides whether or not to give an instruction for bootup from the standby state when an area of a face image is next detected from the first captured image captured by the imaging unit in the standby state.

## Description

### Technical Field

This disclosure relates to an information processing device and a control method.

### Background Art

There is an information processing device which makes a transition to a usable state when a person approaches or to a standby state in which functions except some of the functions are stopped when the person leaves. For example, in Patent Literature 1, it is detected whether a person is approaching or has moved away using an infrared sensor.

In recent years, with the development of computer vision and the like, detection accuracy when detecting a face from an image has been getting higher. Therefore, person detection by face detection is starting to be used instead of person detection by the infrared sensor. Further, at the time of bootup of the information processing device, it is authenticated whether or not a person is an authorized user (for example, login authentication), and as this authentication method, it is starting to use face authentication. For example, when a person approaches, the information processing device is booted by detecting a face of the person, and when the person is the authorized user as a result of face authentication after that, login to the information processing device is allowed to make a transition to the usable state.

### Citation List

### Patent Literature

Patent Literature 1: Japanese Unexamined Patent Application Publication No. 2016-148895

### Summary of Invention

### Technical Problem

However, even when any person other than the authorized user approaches, the information processing device is booted by detecting a face. In this case, authentication fails at the stage of login authentication after that, and login is not allowed. In other words, there is a problem that the information processing device is unnecessarily booted not only when the authorized user approaches, but also even when any person other than the authorized user approaches.

The present invention has been made in view of the above circumstances, and it is an object thereof to provide an information processing device and a control method to prevent unnecessary bootup when booting a system by face detection.

### Solution to Problem

The present invention has been made to solve the above problem, and an information processing device according to the first aspect of the present invention is an information processing device for booting a system from a standby state based on a face detection result by face detection, the information processing device including: a memory which temporarily stores a program of the system; a first processor which detects an area of a face image with a face captured therein from a captured image captured by an imaging unit; a second processor which gives an instruction for bootup from the standby state based on the fact that the area of the face image is detected from a first captured image captured by the imaging unit in the standby state; and a third processor which executes the program stored in the memory based on the instruction from the second processor to boot the system, and after bootup of the system, which executes authentication processing to authenticate whether or not it is an authorized user, wherein based on the face image detected from the first captured image in the standby state, and an authentication result of the authentication processing, the second processor decides whether or not to give the instruction for bootup from the standby state when an area of a face image is next detected from the first captured image captured by the imaging unit in the standby state.

The above information processing device may be such that the first processor associates the face image detected from the first captured image in the standby state with the authentication result of the authentication processing, and when the area of the face image is next detected from the first captured image captured by the imaging unit in the standby state, the second processor decides whether or not to give the instruction for bootup from the standby state based on the associated authentication result.

The above information processing device may also be such that the first processor associates a face image detected from the first captured image captured by the imaging unit from the standby state until the authentication processing, with the authentication result of the authentication processing.

The above information processing device may further be such that, in a case where an area of a face image is next detected from the first captured image captured by the imaging unit in the standby state, when an authentication result associated with a face image corresponding to the detected face image is authentication failure, the second processor does not give the instruction for bootup from the standby state.

Further, the above information processing device may be such that, in a case where an area of a face image is next detected from the first captured image captured by the imaging unit in the standby state, when an authentication result associated with a face image corresponding to the detected face image is authentication success, the second processor gives the instruction for bootup from the standby state.

Further, the above information processing device may be such that the third processor executes the authentication processing based on face authentication processing based on a face image detected from a second captured image captured by the imaging unit after bootup of the system.

Further, the above information processing device may be such that the imaging unit includes a first imaging unit for capturing a captured image based on visible light and a second imaging unit for capturing a captured image based on infrared rays, the first captured image is a captured image captured by using the first imaging unit, and the second captured image is a captured image(s) captured by using the second imaging unit, or using both the first imaging unit and the second imaging unit.

Further, the above information processing device may be such that when the area of the face image is no longer detected from the first captured image captured by the imaging unit after bootup of the system, the second processor gives an instruction to make a transition to the standby state.

Further, the above information processing device may be such that, even in a case where the area of the face image is detected from the first captured image captured by the imaging unit after bootup of the system, when an authentication result associated with a face image corresponding to the detected face image is authentication failure, the second processor gives the instruction to make the transition to the standby state.

Further, a control method according to the second aspect of the present invention is a control method for an information processing device including a memory for temporarily storing a program of a system to boot the system from a standby state based on a face detection result by face detection, the control method including: a step of causing a first processor to detect an area of a face image with a face captured therein from a captured image captured by an imaging unit; a step of causing a second processor to give an instruction for bootup from the standby state based on the fact that the area of the face image is detected from a first captured image captured by the imaging unit in the standby state; a step of causing a third processor to execute the program stored in the memory based on the instruction from the second processor to boot the system, and after bootup of the system, to execute authentication processing to authenticate whether or not it is an authorized user; and a step in which, based on the face image detected from the first captured image in the standby state, and an authentication result of the authentication processing, the second processor decides whether or not to give the instruction for bootup from the standby state when an area of a face image is next detected from the first captured image captured by the imaging unit in the standby state.

### Effect of Invention

The above aspects of the present invention can prevent unnecessary bootup when booting a system by face detection.

### Brief Description of Drawings

FIG. 1 is a diagram for describing an outline of HPD processing of an information processing device according to an embodiment.
FIG. 2 is a diagram illustrating an example of a person detection range of the information processing device according to the embodiment.
FIG. 3 is a diagram illustrating an outline of HPD processing using an authentication result according to the embodiment.
FIG. 4 is a perspective view illustrating an appearance configuration example of the information processing device according to the embodiment.
FIG. 5 is a schematic block diagram illustrating an example of the hardware configuration of the information processing device according to the embodiment.
FIG. 6 is a block diagram illustrating an example of the functional configuration of the information processing device according to the embodiment.
FIG. 7 is a flowchart illustrating an example of HPD processing in a standby state according to the embodiment.
FIG. 8 is a flowchart illustrating an example of login authentication processing by face authentication according to the embodiment.
FIG. 9 is a flowchart illustrating an example of HPD processing in a normal operating state according to the embodiment.

### Description of Embodiment

An embodiment of the present invention will be described below with reference to the accompanying drawings.

First, the outline of an information processing device according to the present embodiment will be described. An information processing device 1 according to the present embodiment is, for example, a laptop (clamshell) PC (Personal Computer). Note that the information processing device 1 may also be any other form of information processing device such as a desktop PC, a tablet PC, or a smartphone.

The information processing device 1 can make a transition at least between a normal operating state (power-on state) and a standby state as system operating states. The normal operating state is an operating state capable of executing processing without being particularly limited, which corresponds, for example, to S0 state defined in the ACPI (Advanced Configuration and Power Interface) specification. The standby state is a state in which at least part of system processing is limited. For example, the standby state may be the standby state or a sleep state, Modern Standby in Windows (registered trademark), a state corresponding to S3 state (sleep state) defined in the ACPI specification, or the like. For example, the standby state is an operating state lower in power consumption than the normal operating state.

In the following, a transition of the system operating state from the standby state to the normal operating state may also be called "boot." In the standby state, since the activation level is generally lower than that in the normal operating state, the boot of the system of the information processing device 1 leads to the activation of the operation of the system in the information processing device 1.

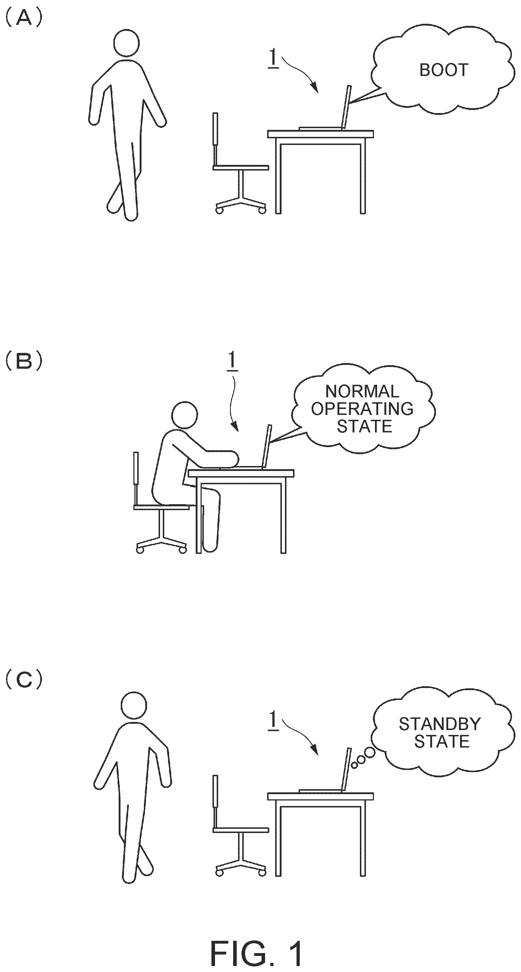

FIG. 1 is a diagram for describing the outline of HPD processing of the information processing device 1 according to the present embodiment. The information processing device 1 detects a person (that is, a user) present in the neighborhood of the information processing device 1. Processing to detect the presence of this person is called HPD (Human Presence Detection) processing. The information processing device 1 detects the presence or absence of a person by the HPD processing to control the operating state of the system of the information processing device 1 based on the detection result. For example, as illustrated in FIG. 1(A), when detecting a change from a state where no person is present in front of the information processing device 1 (Absence) to a state where a person is present (Presence), that is, when detecting that a person has approached the information processing device 1 (Approach), the information processing device 1 determines that a user has approached and automatically boots the system to make a transition to the normal operating state. Further, in a state where a person is present in front of the information processing device 1 (Presence) as illustrated in FIG. 1(B), the information processing device 1 determines that the user is present and continues the normal operating state. Then, as illustrated in FIG. 1(C), when detecting a change from the state where the person is present in front of the information processing device 1 (Presence) to a state where no person is present (Absence), that is, when detecting that the person has left the information processing device 1 (Leave), the information processing device 1 determines that the user has left and causes the system to make a transition to the standby state.

The information processing device 1 detects the presence of a person in a predetermined forward range of the information processing device 1.

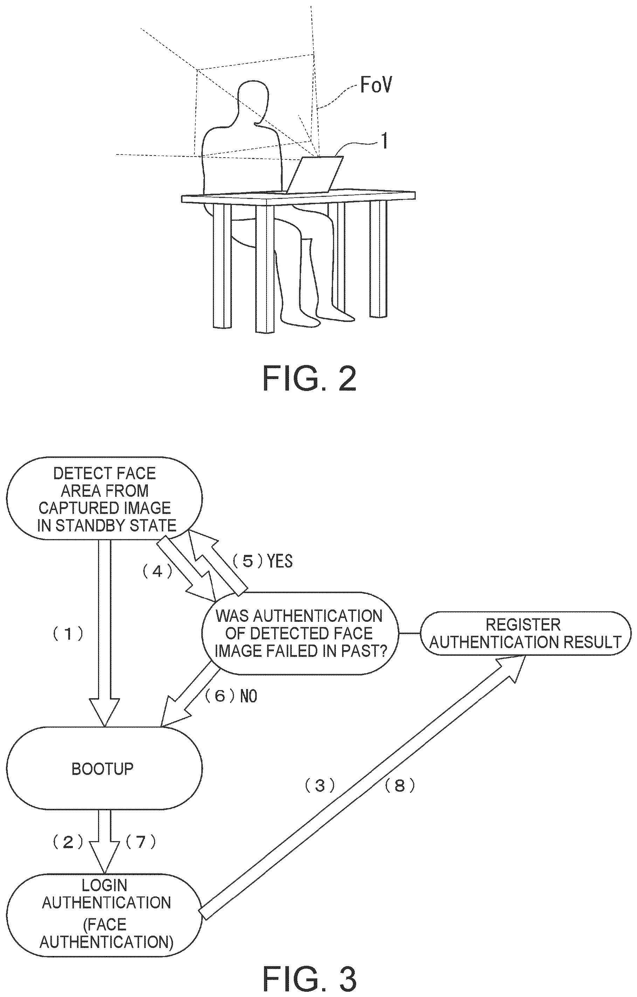

FIG. 2 is a diagram illustrating an example of a person detection range of the information processing device 1 according to the present embodiment. In the illustrated example, a detection range FoV (Field of View: detection viewing angle) in front of the information processing device 1 is a person-detectable range. For example, the information processing device 1 determines whether or not a person (user) is present in front of the information processing device 1 by detecting an area of a face image with a face captured therein (hereinafter called a "face area") from a captured image obtained by imaging forward. The detection range FoV corresponds to an angle of view at which the information processing device 1 captures images. When a face area is detected from the captured image, the information processing device 1 determines that the user is present. On the other hand, when no face area is detected from the captured image, the information processing device 1 determines that the user is not present.

Further, when determining that the user is present by the fact that the face area is detected from the captured image, the information processing device 1 boots the system to make the transition to the normal operating state, and executes authentication processing to authenticate whether or not the user is an authorized user after bootup. The authorized user is a user registered as the user who uses the information processing device 1. When determining that the user is the authorized user, the information processing device 1 allows use (allows login) to make the transition to the normal operating state while continuing the boot processing. On the other hand, when determining that the user is not the authorized user, the information processing device 1 continues waiting for authentication without allowing use (without allowing login). The authentication of the user at this bootup is called "login authentication" below.

As login authentication methods, there are password authentication to perform authentication by the user entering a password from a keyboard, PIN authentication by the user entering a PIN (Personal Identification Number), face authentication to perform authentication with a face of the user, fingerprint authentication to perform authentication with a fingerprint of the user, and the like. When login authentication by face authentication is enabled, the information processing device 1 performs the face authentication by checking the features of the face image of the face area detected from the captured image with the features of a pre-registered face image of the authorized user.

Here, in the HPD processing, since the information processing device 1 boots the system by detecting the face area from the captured image when a person approaches, the information processing device 1 boots the system without identifying whether or not the person who has approached is the authorized user at this point. On the other hand, in login authentication processing after bootup, the information processing device 1 authenticates whether or not the person is the authorized user based on the face image of the face area detected from the captured image. Therefore, when any person other than the authorized user has approached, login authentication fails after the system is booted, and login is not allowed.

In this way, there is a case where the system is booted unnecessarily even when any person other than the authorized user has approached. Therefore, the information processing device 1 according to the present embodiment uses the authentication result in the login authentication to prevent unnecessary bootup by the HPD processing.

FIG. 3 is a diagram illustrating an outline of HPD processing using the authentication result according to the present embodiment. Referring to FIG. 3, the outline of the HPD processing according to the present embodiment will be described in order of (1) to (8). In the following, a captured image obtained by the information processing device 1 imaging forward in the standby state is called a "first captured image." Further, a captured image obtained by the information processing device 1 imaging forward upon login authentication after bootup of the system is called a "second captured image."
(1) The information processing device 1 boots the system by detecting a face area from a first captured image in the standby state.
(2) After bootup, the information processing device 1 performs login authentication to allow use only for the authorized user. For example, the information processing device 1 detects a face area from a second captured image in the event of login authentication after bootup to execute face authentication processing based on a face image of the detected face area. Note that the authentication method for the login authentication may also be an authentication method other than the face authentication.
(3) The information processing device 1 registers the authentication result of the login authentication. For example, the information processing device 1 registers the face image of the face area detected from the first captured image in the standby state at (1) mentioned above, and the authentication result (authentication success or authentication failure) in association with each other.
(4) When the face area is next detected from the first captured image in the standby state, the information processing device 1 determines whether or not it is the authorized user based on the authentication result registered at (3) mentioned above. For example, when the face area is detected from the first captured image in the standby state, the information processing device 1 determines whether or not the authentication result associated with a face image corresponding to the detected face image is authentication failure.
(5) When the authentication result associated with the face image corresponding to the detected face image is authentication failure (YES), the information processing device 1 determines that it is not the authorized user, and continues the standby state without booting the system.
(6) On the other hand, the authentication result associated with the face image corresponding to the detected face image is not authentication failure (NO), the information processing device 1 boots the system. The case where the authentication result is not authentication failure is when the authentication result is authentication success (that is, when the face image is a face image authenticated as the authorized user in the past), or when the authentication result is not registered yet (that is, when the face image for which it has not been determined whether or not to be the authorized user in the past).
(7) Like at (2) mentioned above, the information processing device 1 performs login authentication processing after bootup.
(8) Then, like at (3) mentioned above, the information processing device 1 registers the face image of the face area detected from the first captured image in the standby state at (4) mentioned above, and the authentication result (authentication success or authentication failure) in association with each other. When the face image is unregistered, the information processing device 1 newly registers the face image in association with the authentication result, while when the face image is a face image already registered in association with the authentication result, the information processing device 1 updates the face image according to the authentication result.

Thereafter, (4) to (8) are repeated. Thus, since bootup can be disabled even when a person whose login authentication was authentication failure in the past approaches, the information processing device 1 can prevent unnecessary bootup when any person other than the authorized user approaches.

Note that when registering the face image described at (3) and (8) and the authentication result in association with each other, the information processing device 1 may register the face image in association with each of authentication success and authentication failure, respectively, in association with only authentication failure, or in association with only authentication success.

For example, when determining whether or not the authentication result associated with the face image is authentication failure at (4) mentioned above, it will be possible for the information processing device 1 to make the determination if the face image is registered in association with only authentication failure, but the face image may also be registered in association with each of authentication success and authentication failure, respectively.

Further, in a case where the face image is registered in association with only authentication success, the information processing device 1 determines whether or not the authentication result associated with the face image at (4) mentioned above is authentication success so that the information processing device 1 may determine that the authentication result associated with the face image is not authentication failure when determining that the authentication result is authentication success and when the authentication result is not registered.

Next, the configurations of the information processing device 1 according to the present embodiment will be described in detail.

### [Appearance Configuration of Information Processing Device]

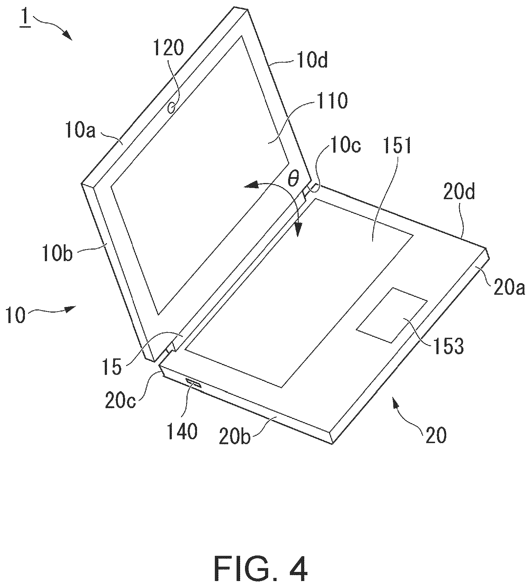

FIG. 4 is a perspective view illustrating an appearance configuration example of the information processing device 1 according to the present embodiment.

The information processing device 1 includes a first chassis 10, a second chassis 20, and a hinge mechanism 15. The first chassis 10 and the second chassis 20 are coupled by using the hinge mechanism 15. The first chassis 10 is rotatable around an axis of rotation formed by the hinge mechanism 15 relative to the second chassis 20. An open angle by the rotation between the first chassis 10 and the second chassis 20 is illustrated as "θ."

The first chassis 10 is also called A cover or a display chassis. The second chassis 20 is also called C cover or a system chassis. In the following description, side faces on which the hinge mechanism 15 is provided among side faces of the first chassis 10 and the second chassis 20 are referred to as side faces 10c and 20c, respectively. Among the side faces of the first chassis 10 and the second chassis 20, faces opposite to the side faces 10c and 20c are referred to as side faces 10a and 20a, respectively. In this figure, the direction from the side face 20a toward the side face 20c is referred to as "rear," and the direction from the side face 20c to the side face 20a is referred to as "front." The right side and the left side in the rearward direction are referred to as "right" and "left," respectively. Left side faces of the first chassis 10 and the second chassis 20 are referred to as side faces 10b and 20b, respectively, and right side faces thereof are referred to as side faces 10d and 20d, respectively. Further, a state where the first chassis 10 and the second chassis 20 overlap each other and are completely closed (a state of open angle θ = 0°) is referred to as a "closed state." Surfaces of the first chassis 10 and the second chassis 20 on the face-to-face sides in the closed state are referred to as respective "inner surfaces," and surfaces opposite to the inner surfaces are referred to as "outer surfaces." Further, a state opposite to the closed state, where the first chassis 10 and the second chassis 20 are open, is referred to as an "open state."

The appearance of the information processing device 1 in FIG. 4 illustrates an example of the open state. The open state is a state where the side face 10a of the first chassis 10 and the side face 20a of the second chassis 20 are separated. In the open state, the respective inner surfaces of the first chassis 10 and the second chassis 20 appear. The open state is one of the states where the user uses the information processing device 1, and the information processing device 1 is often used in a state where the open angle is typically about θ = 100° to 130°. Note that the range of open angles θ to be the open state can be set arbitrarily according to the range of angles rotatable by the hinge mechanism 15 or the like.

A display unit 110 is provided on the inner surface of the first chassis 10. The display unit 110 is configured to include a liquid crystal display (LCD) or an organic EL (Electro Luminescence) display, and the like. Further, an imaging unit 120 is provided in a peripheral area of the display unit 110 on the inner surface of the first chassis 10. For example, the imaging unit 120 is arranged on the side of the side face 20a in the peripheral area of the display unit 110. Note that the position at which the imaging unit 120 is arranged is just an example, and it may be elsewhere as long as the imaging unit 120 can image a direction (frontward) to face the inner surface of the first chassis 10.

In the open state, the imaging unit 120 images a predetermined imaging range in the direction (frontward) to face the inner surface of the first chassis 10. The predetermined imaging range is a range of angles of view defined by an image sensor included in the imaging unit 120 and an optical lens provided in front of the imaging surface of the image sensor, which corresponds to the detection range FoV of a person (face) illustrated in FIG. 2. For example, the imaging unit 120 can capture an image including a person (for example, a user) present in front of (on the front side of) the information processing device 1.

Further, a power button 140 is provided on the side face 20b of the second chassis 20. The power button 140 is an operating element used by the user to give an instruction to power on or power off, make the transition from the standby state to the normal operating state, make the transition from the normal operating state to the standby state, or the like. Further, a keyboard 151 and a touch pad 153 are provided on the inner surface of the second chassis 20 as an input device to accept user's operation input. Note that a touch sensor may also be provided as the input device instead of or in addition to the keyboard 151 and the touch pad 153, or a mouse and an external keyboard may be connected. When the touch sensor is provided, an area corresponding to the display surface of the display unit 110 may be constructed as a touch panel to accept operations. Further, a microphone used to input voice may be included in the input device.

### [Hardware Configuration of Information Processing Device]

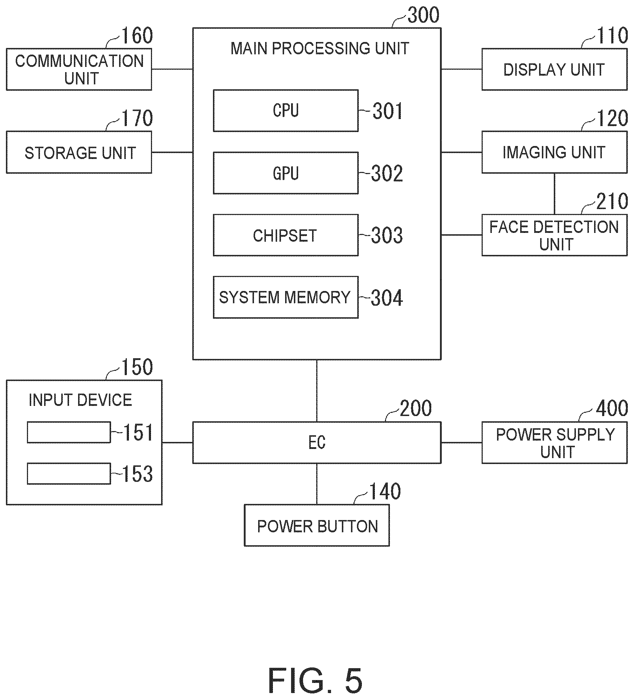

FIG. 5 is a schematic block diagram illustrating an example of the hardware configuration of the information processing device 1 according to the present embodiment. The information processing device 1 is configured to include the display unit 110, the imaging unit 120, the power button 140, the input device 150, a communication unit 160, a storage unit 170, an EC (Embedded Controller) 200, a face detection unit 210, a main processing unit 300, and a power supply unit 400. The display unit 110 displays display data (images) generated based on system processing executed by the main processing unit 300, processing of an application program running on the system processing, and the like.

The imaging unit 120 captures an image of an object within a predetermined angle of view (for example, the detection range FoV illustrated in FIG. 2) in the direction (frontward) to face the inner surface of the first chassis 10, and outputs the captured image to the face detection unit 210 and the main processing unit 300. For example, the imaging unit 120 includes an RGB camera and an IR (Infrared Rays) camera. The RGB camera is a normal camera for capturing an image based on visible light. The IR camera is a camera for capturing an image based on infrared rays emitted from the object.

For example, since the IR camera irradiates infrared rays upon imaging, the IR camera is higher in power consumption upon imaging than the RGB camera. Therefore, when detecting a face area from a first captured image in the standby state, the RGB camera is used because there is a demand to reduce standby power as much as possible. On the other hand, for example, when detecting a face area from a second captured image in login authentication by face authentication to perform face authentication, the IR camera is used to improve authentication accuracy. Note that upon login authentication by face authentication, both the IR camera and the RGB camera may also be used.

Note that the imaging unit 120 may include either one of the IR camera and the RGB camera. For example, the IR camera may be used in the standby state, and the RGB camera may be used in authentication processing upon bootup.

The power button 140 outputs, to the EC 200, an operation signal according to a user's operation. The input device 150 is an input unit for accepting user input, which is configured to include, for example, the keyboard 151 and the touch pad 153. In response to accepting operations on the keyboard 151 and the touch pad 153, the input device 150 outputs, to the EC 200, operation signals indicative of operation contents.

The communication unit 160 is connected to other devices communicably through a wireless or wired communication network to transmit and receive various data. For example, the communication unit 160 is configured to include a wired LAN interface such as Ethernet (registered trademark), a wireless LAN interface such as Wi-Fi (registered trademark), and the like.

The storage unit 170 is configured to include storage media, such as an HDD (Hard Disk Drive) or an SSD (Solid State Drive), a RAM (Random Access Memory), a ROM (Read Only Memory), and the like. The storage unit 170 stores an OS, device drivers, various programs such as applications, and various data acquired by the operation of the programs.

The power supply unit 400 supplies power to each unit according to the operating state of each unit of the information processing device 1. The power supply unit 400 includes a DC (Direct Current)/DC converter. The DC/DC converter converts the voltage of DC power, supplied from an AC (Alternate Current)/DC adapter or a battery (battery pack), to a voltage required for each unit. The power with the voltage converted by the DC/DC converter is supplied to each unit through each power system. For example, the power supply unit 400 supplies power to each unit through each power system based on a control signal input from the EC 200.

The EC 200 is a microcomputer configured to include a CPU (Central Processing Unit), a RAM, a ROM, an I/O (Input/Output) logic circuit, and the like. The CPU of the EC 200 reads a control program (firmware) prestored in the own ROM, and executes the read control program to fulfill the functionality. The EC 200 operates independently of the main system processing unit 300 to control the operation of the main processing unit 300 and manage the operating state of the main processing unit 300. Further, the EC 200 is connected to the power button 140, the input device 150, the power supply unit 400, and the like.

For example, the EC 200 communicates with the power supply unit 400 to acquire information on a battery state (remaining battery capacity, and the like) from the power supply unit 400 and to output, to the power supply unit 400, a control signal or the like for controlling the supply of power according to the operating state of each unit of the information processing device 1. Further, the EC 200 acquires operation signals from the power button 140 and the input device 150, and outputs, to the main processing unit 300, an operation signal related to processing of the main processing unit 300 among the acquired operation signals.

The face detection unit 210 is configured to include a processor for processing image data of a captured image captured by the imaging unit 120. The face detection unit 210 acquires the image data of the captured image captured by the imaging unit 120, and temporarily stores the acquired image data in a memory. The memory in which the image data is stored may be a system memory 304, or an unillustrated memory in the face detection unit 210.

For example, the face detection unit 210 processes the image data of the captured image acquired from the imaging unit 120 to perform face detection processing to detect a face area from the captured image, face authentication processing to authenticate a face image of the detected face area, and the like. The face detection unit 210 transmits, to a chipset 303 of the main processing unit 300, the detection result of the face detection processing, the authentication result of the face authentication processing, and the like.

Note that the face detection unit 210 is operating not only in the normal operating state but also in the standby state. In the standby state, the face detection unit 210 acquires image data of the first captured image captured, for example, by the RGB camera of the imaging unit 120 to detect a face area. Power consumption in the standby state (standby power) can be reduced by imaging using the RGB camera without using the IR camera. On the other hand, in login authentication processing after bootup, the face detection unit 210 can improve face authentication accuracy by acquiring image data of the second captured image captured by the IR camera (or both of the RGB camera and the IR camera) of the imaging unit 120 to detect a face area and perform face authentication.

For example, in the HPD processing described with reference to FIG. 3, the face detection unit 210 performs face detection processing based on the authentication result of the login authentication processing.

The functional configuration in this HPD processing will be described in detail later.

The main processing unit 300 is configured to include a CPU (Central Processing Unit) 301, a GPU (Graphic Processing Unit) 302, the chipset 303, and the system memory 304, where processing of various application programs is executable on the OS (Operating System) by system processing based on the OS.

The CPU 301 executes processing by a BIOS, processing by the OS, processing by application programs running on the OS, and the like. The CPU 301 controls the operating state of the system based on instructions from the chipset 303 and the like. For example, the CPU 301 executes boot processing to boot the system from the standby state. Further, after bootup from the standby state, the CPU 301 executes login authentication processing to authenticate whether or not it is the authorized user, and when the authentication is successful, the transition to the normal operating state is made.

For example, the CPU 301 executes authentication processing by face authentication in the login authentication. Note that the CPU 301 may also execute authentication processing by any authentication other than face authentication in login authentication (for example, by password authentication, PIN authentication, fingerprint authentication, or the like).

When determining that it is the authorized user in the login authentication (authentication success), the CPU 301 allows use (allows login) to make the transition to the normal operating state. On the other hand, when determining that it is not the authorized user in the login authentication (authentication failure), the CPU 301 does not allow use (does not allow login) and continues waiting for login authentication.

The GPU 302 is connected to the display unit 110. The GPU 302 executes image processing under the control of the CPU 301 to generate display data. The GPU 302 outputs the generated display data to the display unit 110.

The chipset 303 has a function as a memory controller, a function as an I/O controller, and the like. For example, the chipset 303 controls reading data from and writing data to the system memory 304, the storage unit 170 and the like by the CPU 301 and the GPU 302. Further, the chipset 303 controls input/output of data from the communication unit 160, the display unit 110, and the EC 200. Further, the chipset 303 has a function as a sensor hub. For example, the chipset 303 acquires the detection result of the face detection from the face detection unit 210 in the HPD processing to detect the presence of a person (user) based on the detection result in order to control the operating state of the system.

The system memory 304 is used as a reading area of a program executed by the CPU 301 and a working area to write processed data. Further, the system memory 304 temporarily stores image data of a captured image captured by the imaging unit 120.

Note that the CPU 301, the GPU 302, and the chipset 303 may be integrated as one processor, or some or each of them may be configured as an individual processor, respectively. For example, in the normal operating state, the CPU 301, the GPU 302, and the chipset 303 are all operating, but in the standby state, only at least part of the chipset 303 is operating. In the standby state, at least the functions required for HPD processing upon bootup are operating.

### [Functional Configuration of Information Processing Device]

Next, the functional configuration in which the information processing device 1 controls the operating state of the system by the HPD processing will be described.

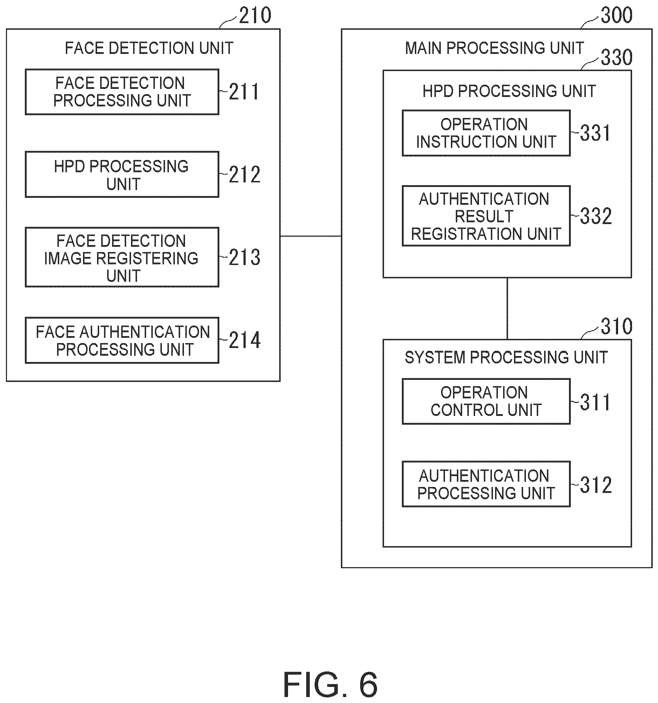

FIG. 6 is a block diagram illustrating an example of the functional configuration of the information processing device 1 according to the present embodiment. The information processing device 1 includes a face detection unit 210, a system processing unit 310, and an HPD control processing unit 330. The face detection unit 210 corresponds to the face detection unit 210 illustrated in FIG. 5, which is a functional component implemented by executing a program inside the face detection unit 210. The system processing unit 310 and the HPD control processing unit 330 are functional components implemented by the main processing unit 300 illustrated in FIG. 5 executing the OS and a program running on the OS. For example, the system processing unit 310 is a functional component implemented by the CPU 301 executing the OS program. Further, the HPD control processing unit 330 is a functional component implemented by the chipset 303 executing a program running on the OS.

The face detection unit 210 includes a face detection processing unit 211, an HPD processing unit 212, a face detection image registering unit 213, and a face authentication processing unit 214. Further, the system processing unit 310 includes an operation control unit 311 and an authentication processing unit 312. Further, the HPD control processing unit 330 includes an operation instruction unit 331 and an authentication result registration unit 332.

The face detection processing unit 211 reads, from the system memory 304, image data of captured images captured by the imaging unit 120 at predetermined time intervals to detect a face area from each of the captured images, respectively. As the face detection method, any detection method using a face detection algorithm for detecting a face based on facial feature information, trained data (learned model) subjected to machine learning based on the facial feature information, a face detection library, or the like can be applied. Further, for example, the predetermined time interval can be 15-second interval or 10-second interval, but the predetermined time interval can be set to any time interval.

For example, in the standby state, the face detection processing unit 211 detects a face area from a first captured image (RGB image) captured by using the RGB camera of the imaging unit 120, and outputs face area coordinate information or the like as the detection result. Further, for example, the face detection processing unit 211 detects a face area from a second captured image (IR image) captured by using the IR camera of the imaging unit 120 upon login authentication, and outputs face area coordinate information or the like as the detection result. Note that the face detection processing unit 211 may also detect a face area from second captured images (IR image and RGB image) captured by using the IR camera and the RGB camera.

The HPD processing unit 212 determines whether or not a user is present in front of the information processing device 1 based on whether or not a face area is detected from the first captured image by the face detection processing unit 211. For example, when the face area is detected from the first captured image by the face detection processing unit 211, the HPD processing unit 212 determines that the user is present in front of the information processing device 1. On the other hand, when any face area is not detected from the first captured image by the face detection processing unit 211, the HPD processing unit 212 determines that the user is not present in front of the information processing device 1.

Further, when it is determined that the user is present in front of the information processing device 1, the HPD processing unit 212 determines whether or not the user is the authorized user. For example, when the face area is detected from the first captured image by the face detection processing unit 211, the HPD processing unit 212 determines whether or not the user is the authorized user based on the detected face image and authentication results in past login authentication.

Specifically, even in the case where the face area is detected from the first captured image by the face detection processing unit 211, when the face image of the detected face area corresponds to a face image for which the authentication result by login authentication was authentication failure in the past, the HPD processing unit 212 determines that the user present in front of the information processing device 1 is not the authorized user. On the other hand, in the case where the face area is detected from the first captured image by the face detection processing unit 211, when the face image of the detected face area corresponds to a face image for which the authentication result by login authentication was authentication success in the past, the HPD processing unit 212 determines that the authorized user is present in front of the information processing device 1.

When determining that the authorized user is present in front of the information processing device 1, the HPD processing unit 212 outputs Presence information. On the other hand, when determining that any user is not present in front of the information processing device 1 or when determining that the user present in front of the information processing device 1 is not the authorized user, the HPD processing unit 212 outputs Absence information.

Note that in the case where the face area is detected from the first captured image by the face detection processing unit 211, when there is no corresponding face image among face images for which login was authenticated in the past, the HPD processing unit 212 cannot know whether or not the user is the authorized user. In this case, since there is a possibility that the user will be the authorized user, the HPD processing unit 212 outputs the Presence information. After that, it is determined whether or not the user is the authorized user in the login authentication after the system is booted up, and the determination result is fed back.

Note that when the face area is detected from the first captured image by the face detection processing unit 211, the HPD processing unit 212 may only determine whether or not the face image of the detected face area corresponds to a face image for which the authentication result by login authentication was authentication failure in the past without determining whether or not the face image corresponds to a face image for which the authentication result was authentication success. In this case, when the face image corresponds to the face image for which the authentication result was authentication failure, the HPD processing unit 212 may output the Absence information, and in the other cases, the HPD processing unit 212 may output the Presence information.

In the standby state, when acquiring the Present information output from the HPD processing unit 212, the operation instruction unit 331 gives an instruction to boot the system from the standby state. For example, the operation instruction unit 331 outputs, to the operation control unit 311, boot instruction information indicative of the instruction to boot the system from the standby state. Further, while acquiring the Absence information from the HPD processing unit 212 in the standby state, the operation instruction unit 331 does not give the instruction to boot the system.

Note that when acquiring the Absence information from the HPD processing unit 212 in the normal operating state, the operation instruction unit 331 gives an instruction to cause the system to make the transition to the standby state. For example, the operation instruction unit 331 outputs, to the operation control unit 311, standby instruction information indicative of the instruction to cause the system to make the transition to the standby state.

When acquiring the boot instruction information output from the operation instruction unit 331, the operation control unit 311 executes a program of the system to boot the system from the standby state. Further, the operation control unit 311 generates an event of login authentication after bootup from the standby state. Then, the operation control unit 311 waits until the authentication result becomes authentication success without allowing login. When the authentication result becomes authentication success, the operation control unit 311 allows login to make the transition to the normal operating state.

Note that when acquiring the standby instruction information output from the operation instruction unit 331 in the normal operating state, the operation control unit 311 causes the system to make the transition from the normal operating state to the standby state.

When the event of login authentication occurs, the authentication processing unit 312 executes authentication processing to authenticate whether or not it is the authorized user. For example, the authentication processing unit 312 executes authentication processing by any of face authentication, password authentication, PIN authentication, and fingerprint authentication. For example, when executing authentication processing by face authentication, the authentication processing unit 312 acquires the authentication result of face authentication from the face detection unit 210 to execute the authentication processing based on the acquired authentication result. In the case of authentication success, the authentication processing unit 312 determines that it is the authorized user, while in the case of authentication failure, the authentication processing unit 312 determines that it is not the authorized user.

Note that in the case of password authentication or PIN authentication, the authentication processing unit 312 acquires, through the EC 200, an operation signal based on user's operations on the keyboard 151. Then, based on the acquired operation signal, the authentication processing unit 312 executes authentication processing by checking a password or a PIN input by the user's operations with a preregistered password or PIN. Further, in the case of fingerprint authentication, the authentication processing unit 312 executes authentication processing by checking a fingerprint acquired using an unillustrated fingerprint sensor with a preregistered fingerprint.

When the event of login authentication occurs, the face detection processing unit 211 detects a face area from a second captured image (IR image) captured by using the IR camera of the imaging unit 120. The face authentication processing unit 214 performs face authentication processing based on the face image of the face area detected from the second captured image (IR image) by the face detection processing unit 211. For example, the face authentication processing unit 214 performs face authentication processing by checking the face image of the detected face area with a preregistered face image, and outputs the authentication result to the authentication processing unit 312.

Note that when the event of login authentication occurs, the face detection processing unit 211 may also detect a face area from second captured images (IR image and RGB image) captured by using both the IR camera and the RGB camera of the imaging unit 120. Further, the face authentication processing unit 214 may perform face authentication processing based on the face image of the face area detected from the second captured images (IR image and RGB image) by the face detection processing unit 211.

The authentication result registration unit 332 feeds back the authentication result of the login authentication by the authentication processing unit 312 to the face detection unit 210 to register the authentication result at the time of bootup from the standby state. For example, the authentication result registration unit 332 outputs, to the face detection unit 210, the authentication result of login authentication by the authentication processing unit 312.

The face detection image registering unit 213 registers, in association with each other, the face image when the face area is detected from the first captured image by the face detection processing unit 211, and the authentication result of login authentication after bootup from the standby state due to the fact that the face area is detected. For example, the face detection image registering unit 213 stores, in an unillustrated memory (nonvolatile memory) inside the face detection unit 210, the face image when the face area is detected from the first captured image by the face detection processing unit 211, and the authentication result acquired from the authentication result registration unit 332 in association with each other. In the following, information registered by associating the face image and the authentication result with each other is called "face-image authentication information."

In the case where the face area is detected from the first captured image by the face detection processing unit 211, when determining whether or not it is the authorized user based on the detected face image and the authentication results in the past login authentication, the HPD processing unit 212 described above makes a determination based on the face-image authentication information registered by this face detection image registering unit 213.

### [Operation by HPD Processing]

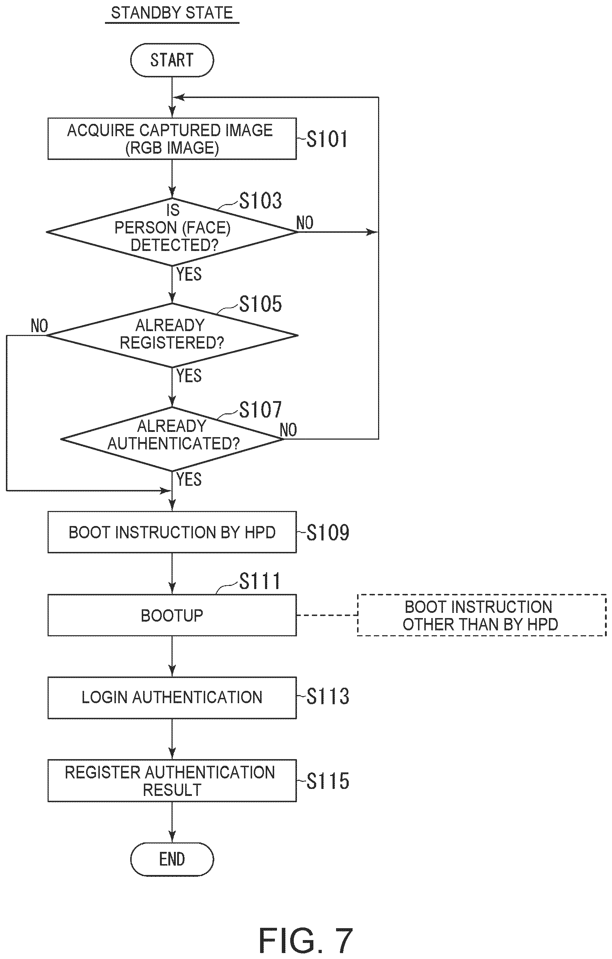

Next, the operation of processing to control the operating state of the system by the HPD processing will be described. Referring first to FIG. 7, the operation of HPD processing in the standby state will be described. FIG. 7 is a flowchart illustrating an example of HPD processing in the standby state according to the present embodiment.

(Step S101) The face detection unit 210 acquires a first captured image (RGB image) captured by the imaging unit 120 in the standby state, and proceeds to a process in step S103.

(Step S103) The face detection unit 210 detects a face area from the first captured image (RGB image) acquired in step S101. When any face area is not detected (NO), the face detection unit 210 returns to the process in step S101. On the other hand, when the face area is detected (YES), the face detection unit 210 proceeds to a process in step S105.

(Step S105) The face detection unit 210 determines whether or not the face image detected in step S103 is already registered in the face-image authentication information. When determining that the detected face image is not registered in the face-image authentication information yet (NO), the face detection unit 210 proceeds to a process in step S109. On the other hand, when determining that the detected face image is already registered in the face-image authentication information (YES), the face detection unit 210 proceeds to a process in step S107.

(Step S107) The face detection unit 210 determines whether or not the face image detected in step S103 corresponds to a face image already registered in the past login authentication (that is, a face image for which the authentication result became authentication success). For example, when the authentication result associated with a face image corresponding to the face image detected in step S103 based on the face-image authentication information is authentication success, the face detection unit 210 determines that the detected face image is the face image already registered, while when the authentication result is authentication failure, the face detection unit 210 determines that the detected face image is an unauthenticated face image. When determining that the face image is the unauthenticated face image (NO), the face detection unit 210 returns to the process in step S101. On the other hand, when determining that the face image is the face image already registered (YES), the face detection unit 210 proceeds to the process in step S109.

(Step S109) The face detection unit 210 outputs the Presence information. When acquiring the Presence information output from the face detection unit 210, the HPD control processing unit 330 outputs, to the system processing unit 310, boot instruction information indicative of an instruction to boot the system from the standby state as a boot instruction by HPD. Then, the procedure proceeds to a process in step S111.

(Step S111) When acquiring the boot instruction information output from the operation instruction unit 331, the system processing unit 310 executes the program of the system to boot the system from the standby state. Note that even when any boot instruction other than by HPD (an operation on the power button 140 or the like) is given, the system processing unit 310 executes the program of the system to boot the system from the standby state. Then, the procedure proceeds to a process in step S113.

(Step S113) After bootup from the standby state, the system processing unit 310 generates the event of login authentication to execute authentication processing for authenticating whether or not it is the authorized user. For example, the system processing unit 310 executes authentication processing by any of face authentication, password authentication, PIN authentication, and fingerprint authentication.

(Step S115) The system processing unit 310 feeds back the authentication result of login authentication to the face detection unit 210 to register the authentication result at the time of bootup from the standby state. For example, the authentication result registration unit 332 outputs, to the face detection unit 210, the authentication result of login authentication by the authentication processing unit 312. The face detection unit 210 registers, in association with each other, the face image when the face area is detected from the first captured image by the face detection processing unit 211, and the authentication result of login authentication after bootup from the standby state due to the fact that the face area is detected.

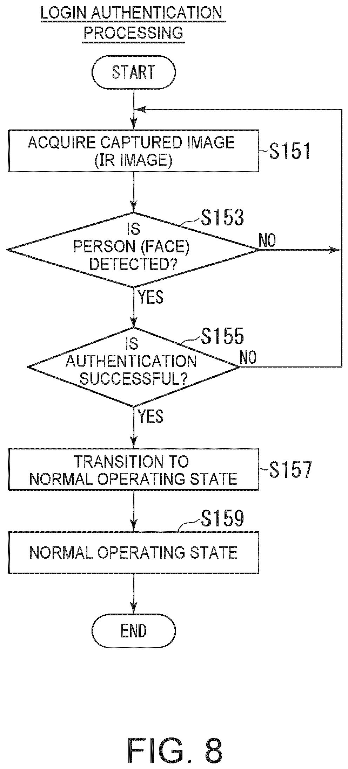

Referring next to FIG. **8****,** the operation of authentication processing by face authentication as an example of the login authentication processing in step S113 will be described.

FIG. 8 is a flowchart illustrating an example of login authentication processing by face authentication according to the present embodiment.

(Step S151) The face detection unit 210 acquires a second captured image(s) (IR image, or IR image and RGB image) captured by the imaging unit 120, and proceeds to a process in step S153.

(Step S153) The face detection unit 210 detects a face area from the second captured image(s) (IR image, or IR image and RGB image) acquired in step S151. When any face area is not detected (NO), the face detection unit 210 returns to the process in step S151. On the other hand, when the face area is detected (YES), the face detection unit 210 proceeds to a process in step S155.

(Step S155) The face detection unit 210 performs face authentication processing based on the face image of the face area detected in step S153. For example, the face detection unit 210 performs face authentication processing by checking the face image of the detected face area with a preregistered face image, and outputs the authentication result to the system processing unit 310. The system processing unit 310 determines whether or not the authentication result is authentication success based on the authentication result of the face authentication processing output from the face detection unit 210. When determining that the authentication result is authentication failure (NO), the system processing unit 310 does not allow login and returns to step S151. On the other hand, when determining that the authentication result is authentication success (YES), the system processing unit 310 allows login and proceeds to a process in step S157.

(Step S157) The system processing unit 310 executes login processing with an account of the user whose face is authenticated.

Note that the example of login authentication processing by face authentication is described here, but the login authentication processing is not limited to face authentication, and the login authentication may be login authentication by password authentication, PIN authentication, fingerprint authentication, or the like.

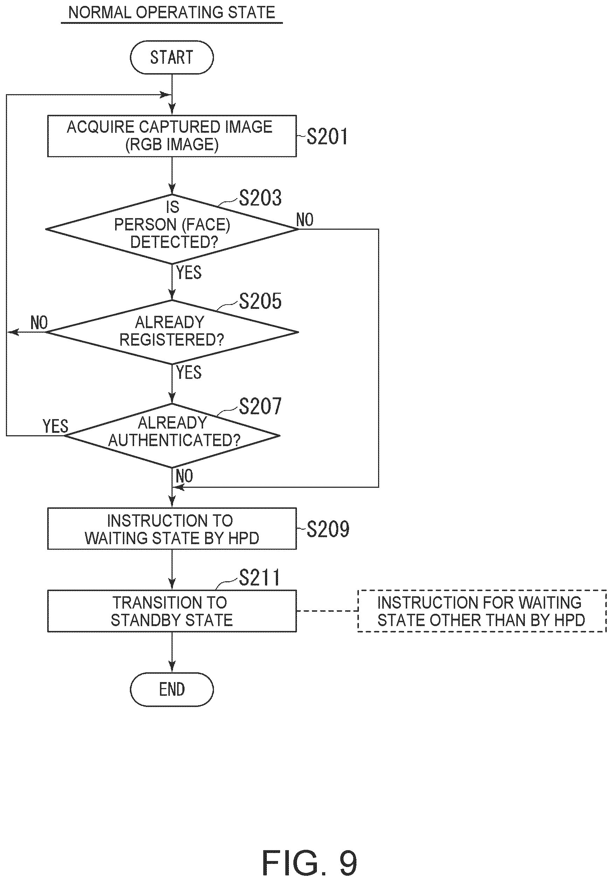

Referring next to FIG. **9****,** the operation of HPD processing in the normal operating state will be described.

FIG. 9 is a flowchart illustrating an example of HPD processing in the normal operating state according to the present embodiment.

(Step S201) The face detection unit 210 acquires the first captured image (RGB image) captured by the imaging unit 120 in the standby state, and proceeds to a process in step S203.

(Step S203) The face detection unit 210 detects a face area from the first captured image (RGB image) acquired in step S201. When any face area is not detected (NO), the face detection unit 210 proceeds to a process in step S209 because no user is present. On the other hand, when the face area is detected (YES), the face detection unit 210 proceeds to a process in step S205.

(Step S205) The face detection unit 210 determines whether or not the face image detected in step S203 is already registered in the face-image authentication information. When determining that the detected face image is not registered in the face-image authentication information yet (NO), the face detection unit 210 returns to the process in step S201. On the other hand, when determining that the detected face image is already registered in the face-image authentication information (YES), the face detection unit 210 proceeds to a process in step S207.

(Step S207) The face detection unit 210 determines whether or not the face image detected in step S203 corresponds to a face image already authenticated in the past login authentication (that is, a face image for which the authentication result became authentication success). For example, when the authentication result associated with a face image corresponding to the face image detected in step S203 based on the face-image authentication information is authentication success, the face detection unit 210 determines that the detected face image is the face image already registered, while when the authentication result is authentication failure, the face detection unit 210 determines that the detected face image is an unauthenticated face image. When determining that the face image is the authenticated face image (YES), the face detection unit 210 returns to the process in step S201. On the other hand, when determining that the face image is the unauthenticated face image (NO), the face detection unit 210 proceeds to the process in step S209 because the face image is not that of the authorized user.

(Step S209) The face detection unit 210 outputs the Absence information. When acquiring the Absence information output from the face detection unit 210, the HPD control processing unit 330 outputs, to the system processing unit 310, standby instruction information indicative of an instruction to cause the system to make the transition to the standby state as an instruction to the standby state by HPD. Then, the procedure proceeds to a process in step S211.

(Step S211) When acquiring the standby instruction information output from the operation instruction unit 331, the system processing unit 310 causes the system to make the transition from the normal operating state to the standby state. Note that even when any instruction to the standby state is given by other than HPD, the system processing unit 310 causes the system to make the transition from the normal operating state to the standby state. For example, the instruction to the standby state by other than HPD is that a state of no operation continues for a certain period of time, that an operation to make a transition to a sleep state is performed by the user, and the like.

As described above, the information processing device 1 according to the present embodiment boots the system from the standby state based on HPD processing using the face detection result by face detection. The information processing device 1 includes the system memory 304 (an example of a memory) which temporarily stores the program of the system, the face detection unit 210 (an example of a first processor), the HPD control processing unit 330 (an example of a second processor, which is the chipset 303, for example), and the system processing unit 310 (an example of a third processor, which is the CPU 301, for example).

The face detection unit 210 detects an area of a face image (a face area) with a face captured therein from a captured image captured by the imaging unit 120. The HPD control processing unit 330 gives an instruction for bootup from the standby state based on the fact that the face area is detected from a first captured image captured by the imaging unit 120 in the standby state. The system processing unit 310 executes the program stored in the system memory 304 based on the instruction from the HPD control processing unit 330 to boot the system, and after bootup of the system, executes login authentication processing (an example of authentication processing) to authenticate whether or not it is the authorized user. Then, based on the face image detected from the first captured image in the standby state, and the authentication result of login authentication processing, the HPD control processing unit 330 decides whether or not to give the instruction for bootup from the standby state when a face area is next detected from the first captured image captured by the imaging unit 120 in the standby state.

Thus, upon next bootup of the system by face detection based on the authentication result of login authentication when the system was booted by face detection, since the information processing device 1 decides whether or not to boot the system, unnecessary bootup can be prevented.

For example, the face detection unit 210 registers the face image detected from the first captured image in the standby state and the authentication result of the login authentication processing in association with each other. As an example, the face detection unit 210 registers, as the face-image authentication information, the face image detected from the first captured image in the standby state, and the authentication result of the login authentication processing in association with each other. Then, when a face area is next detected from the first captured image captured by the imaging unit 120 in the standby state, the HPD control processing unit 330 decides whether or not to give the instruction for bootup from the standby state based on the authentication result in the association (for example, in the face-image authentication information) mentioned above.

Thus, the information processing device 1 registers the authentication result of login authentication when the system is booted by face detection in association with the face image with the face detected therein, and when the system is next booted by face detection, since the information processing device 1 decides whether or not to boot the system using the authentication result of login authentication, unnecessary bootup can be prevented.

Here, the face detection unit 210 may also associate each of face images captured from the first captured image from the standby state until the login authentication processing, with the authentication result of the login authentication processing.

Thus, since each of plural face images captured from the standby state until the login authentication processing is registered in association with the authentication result of the login authentication processing, the information processing device 1 can increase the accuracy of identifying whether or not each face image is the detected face image.

For example, in a case where a face area (an area of a face image) is next detected from the first captured image captured by the imaging unit 120 in the standby state, when the authentication result associated with a face image corresponding to the detected face image is authentication failure, the HPD control processing unit 330 does not give the instruction for bootup from the standby state.

Thus, even in a case where a face is detected upon next bootup of the system by face detection based on the authentication result of login authentication when the system was booted by face detection, if the face is not that of the authorized user, since the information processing device 1 will not boot the system, unnecessary bootup can be prevented.

Further, for example, in the case where the face area (the area of the face image) is next detected from the first captured image captured by the imaging unit 120 in the standby state, when the authentication result associated with a face image corresponding to the detected face image is authentication success, the HPD control processing unit 330 gives the instruction for bootup from the standby state.

Thus, upon next bootup of the system by face detection based on the authentication result of login authentication when the system was booted by face detection, since the information processing device 1 will boot the system if the detected face is that of the authorized user, unnecessary bootup can be prevented.

Further, for example, the system processing unit 310 executes login authentication processing based on face authentication processing based on a face image detected from a second captured image captured by the imaging unit 120 after bootup of the system.

Thus, the information processing device 1 can determine whether or not it is the authorized user by face authentication.

As an example, the imaging unit 120 includes the RGB camera (an example of a first imaging unit) for capturing a captured image (RGB image) based on visible light, and the IR camera (an example of a second imaging unit) for capturing a captured image based on infrared rays. For example, the first captured image captured by the imaging unit 120 in the standby state is a captured image (RGB image) captured by using the RGB camera. Further, for example, the second captured image(s) captured by the imaging unit 120 upon login authentication after bootup of the system is a captured image(s) (IR image, or RGB image and IR image) captured by using the IR camera, or both of the RGB camera and the IR camera.

Thus, the information processing device 1 can reduce standby power in the standby state by not using the IR camera, and can improve face authentication accuracy by using the IR camera upon login authentication after bootup.

Further, when the face area is no longer detected from the first captured image captured by the imaging unit 120 after bootup of the system (for example, in the normal operating state), the HPD control processing unit 330 gives the instruction to make the transition to the standby state.

Thus, when the user has left in the normal operating state, the information processing device 1 can automatically make the transition to the standby state.

Further, even in a case where the face area is detected from the first captured image captured by the imaging unit 120 after bootup of the system (for example, in the normal operating state), when the authentication result associated with a face image corresponding to the detected face image is authentication failure, the HPD control processing unit 330 gives the instruction to make the transition to the standby state.

Thus, even in a case where a face is detected in the normal operating state, when the face is not that of the authorized user and the authorized user has left, the information processing device 1 can automatically make the transition to the standby state.

Further, a control method for the information processing device 1 according to the present embodiment includes: a step of causing the face detection unit 210 (the example of the first processor) to detect an area of a face image (a face area) with a face captured therein from a captured image captured by the imaging unit 120; a step of causing the HPD control processing unit 330 (the example of the second processor, which is the chipset 303, for example) to give an instruction for bootup from the standby state based on the fact that the face area is detected from a first captured image captured by the imaging unit 120 in the standby state; a step of causing the system processing unit 310 (the example of the third processor, which is the CPU 301, for example) to execute the program stored in the system memory 304 based on the instruction from the HPD control processing unit 330 to boot the system, and after bootup of the system, to execute login authentication processing (the example of authentication processing) to authenticate whether or not it is the authorized user; and a step in which, based on the face image detected from the first captured image in the standby state, and the authentication result of the login authentication processing, the HPD control processing unit 330 decides whether or not to give the instruction for bootup from the standby state when a face area is next detected from the first captured image captured by the imaging unit 120 in the standby state.

Thus, upon next bootup of the system by face detection based on the authentication result of login authentication when the system was booted by face detection, since the information processing device 1 decides whether or not to boot the system, unnecessary bootup can be prevented.

While the embodiment of this invention has been described in detail above with reference to the accompanying drawings, the specific configurations are not limited to those in the embodiment described above, and designs without departing from the scope of this invention are also included. For example, the respective components described in the above embodiment can be combined arbitrarily.

Further, the CPU 301 (the example of the third processor) and the chipset 303 (the example of the second processor) may be configured as individual processors, or may be integrated as one processor.

Further, in the aforementioned embodiment, the example in which the face detection unit 210 (the example of the first processor) is provided separately from the chipset 303 is illustrated, but part or whole of the face detection unit 210 may be provided in the chipset 303, or provided in a processor integrated with the chipset 303. Further, the face detection unit 210, the chipset 303, and the CPU 301 may be integrated as one processor. Further, part or whole of the face detection unit 210 may be provided in the EC 200.

Further, a hibernation state, a power-off state, and the like may be included as the standby state described above. The hibernation state corresponds, for example, to S4 state defined in the ACPI specification. The power-off state corresponds, for example, to S5 state (shutdown state) defined in the ACPI specification. Note that the standby state, the sleep state, the hibernation state, the power-off state, and the like as the standby state are states lower in power consumption than the normal operating state (states of reducing power consumption).

Note that the information processing device 1 described above has a computer system therein. Then, a program for implementing the function of each component included in the information processing device 1 described above may be recorded on a computer-readable recording medium so that the program recorded on this recording medium is read into the computer system and executed to perform processing in each component included in the information processing device 1 described above. Here, the fact that "the program recorded on the recording medium is read into the computer system and executed" includes installing the program on the computer system. It is assumed that the "computer system" here includes the OS and hardware such as peripheral devices and the like. Further, the "computer system" may also include two or more computers connected through networks including the Internet, WAN, LAN, and a communication line such as a dedicated line. Further, the "computer-readable recording medium" means a portable medium such as flexible disk, a magneto-optical disk, a flash ROM or a CD-ROM, of a storage device such as a hard disk incorporated in the computer system. Thus, the recording medium with the program stored thereon may be a non-transitory recording medium such as the CD-ROM.

Further, a recording medium internally or externally provided to be accessible from a delivery server for delivering the program is included as the recording medium. Note that the program may be divided into plural pieces, downloaded at different timings, respectively, and then united in each component included in the information processing device 1, or delivery servers for delivering respective divided pieces of the program may be different from one another. Further, it is assumed that the "computer-readable recording medium" includes a medium on which the program is held for a given length of time, such as a volatile memory (RAM) inside a computer system as a server or a client when the program is transmitted through a network. The above-mentioned program may also be to implement some of the functions described above. Further, the program may be a so-called differential file (differential program) capable of implementing the above-described functions in combination with a program(s) already recorded in the computer system.

Further, some or all of the functions of the information processing device 1 in the above-described embodiment may be realized as an integrated circuit such as LSI (Large Scale Integration). Each function may be implemented by a processor individually, or some or all of the functions may be integrated as a processor. Further, the method of circuit integration is not limited to LSI, and it may be realized by a dedicated circuit or a general-purpose processor. Further, if integrated circuit technology replacing the LSI appears with the progress of semiconductor technology, an integrated circuit according to the technology may be used.

### Description of Reference Numerals

1 information processing device, 10 first chassis, 20 second chassis, 15 hinge mechanism, 110 display unit, 120 imaging unit, 140 power button, 150 input device, 151 keyboard, 153 touch pad, 160 communication unit, 170 storage unit, 200 EC, 210 face detection unit, 211 face detection processing unit, 212 HPD processing unit, 213 face detection image registering unit, 214 face authentication processing unit, 300 main processing unit, 301 CPU, 302 GPU, 303 chipset, 304 system memory, 310 system processing unit, 311 operation control unit, 312 authentication processing unit, 330 HPD control processing unit, 331 operation instruction unit, 332 authentication result registration unit, 400 power supply unit

## Claims

1. An information processing device for booting a system from a standby state based on a face detection result by face detection, comprising:
a memory which temporarily stores a program of the system;
a first processor which detects an area of a face image with a face captured therein from a captured image captured by an imaging unit;
a second processor which gives an instruction for bootup from the standby state based on a fact that the area of the face image is detected from a first captured image captured by the imaging unit in the standby state; and
a third processor which executes the program stored in the memory based on the instruction from the second processor to boot the system, and after bootup of the system, which executes authentication processing to authenticate whether or not it is an authorized user,
wherein based on the face image detected from the first captured image in the standby state, and an authentication result of the authentication processing, the second processor decides whether or not to give the instruction for bootup from the standby state when an area of a face image is next detected from the first captured image captured by the imaging unit in the standby state.

2. The information processing device according to Claim 1, wherein
the first processor associates the face image detected from the first captured image in the standby state with the authentication result of the authentication processing, and
when the area of the face image is next detected from the first captured image captured by the imaging unit in the standby state, the second processor decides whether or not to give the instruction for bootup from the standby state based on the associated authentication result.

3. The information processing device according to Claim 2, wherein the first processor associates a face image detected from the first captured image captured by the imaging unit from the standby state until the authentication processing, with the authentication result of the authentication processing.

4. The information processing device according to Claim 2, wherein in a case where an area of a face image is next detected from the first captured image captured by the imaging unit in the standby state, when an authentication result associated with a face image corresponding to the detected face image is authentication failure, the second processor does not give the instruction for bootup from the standby state.

5. The information processing device according to Claim 2, wherein in a case where an area of a face image is next detected from the first captured image captured by the imaging unit in the standby state, when an authentication result associated with a face image corresponding to the detected face image is authentication success, the second processor gives the instruction for bootup from the standby state.

6. The information processing device according to Claim 1, wherein the third processor executes the authentication processing based on face authentication processing based on a face image detected from a second captured image captured by the imaging unit after bootup of the system.

7. The information processing device according to Claim 6, wherein
the imaging unit includes a first imaging unit for capturing a captured image based on visible light and a second imaging unit for capturing a captured image based on infrared rays,
the first captured image is a captured image captured by using the first imaging unit, and
the second captured image is a captured image(s) captured by using the second imaging unit, or using both the first imaging unit and the second imaging unit.

8. The information processing device according to Claim 2, wherein when the area of the face image is no longer detected from the first captured image captured by the imaging unit after bootup of the system, the second processor gives an instruction to make a transition to the standby state.

9. The information processing device according to Claim 8, wherein even in a case where the area of the face image is detected from the first captured image captured by the imaging unit after bootup of the system, when an authentication result associated with a face image corresponding to the detected face image is authentication failure, the second processor gives the instruction to make the transition to the standby state.

10. A control method for an information processing device including a memory for temporarily storing a program of a system to boot the system from a standby state based on a face detection result by face detection, the control method comprising:
a step of causing a first processor to detect an area of a face image with a face captured therein from a captured image captured by an imaging unit;
a step of causing a second processor to give an instruction for bootup from the standby state based on a fact that the area of the face image is detected from a first captured image captured by the imaging unit in the standby state;
a step of causing a third processor to execute the program stored in the memory based on the instruction from the second processor to boot the system, and after bootup of the system, to execute authentication processing to authenticate whether or not it is an authorized user; and
a step in which, based on the face image detected from the first captured image in the standby state, and an authentication result of the authentication processing, the second processor decides whether or not to give the instruction for bootup from the standby state when an area of a face image is next detected from the first captured image captured by the imaging unit in the standby state.
